# EUROPÄISCHE PATENTANMELDUNG

(11) **EP 1 939 896 A1**
(43) Veröffentlichungstag der Anmeldung: **02.07.2008**
(21) Anmeldenummer: 06292075.6
(22) Anmeldetag: 19.12.2006
(51) Int. Cl.: H01B 7/08, H02G 11/00

(54) **Anordnung zum Anschließen von ortsveränderlichen Verbrauchern an eine Speisequelle**

(71) Anmelder: Nexans, 75008 Paris (FR)
(72) Erfinder: Grögl, Ferdinand, 90403 Nürnberg (DE); Böll, Jürgon, 90562 Heroldsberg (DE)
(74) Vertreter: Döring, Roger

(57) **Zusammenfassung**

Es wird eine Anordnung zum Anschließen von ortsveränderlichen Verbrauchern (4) an eine Speisequelle (2) angegeben, welche mindestens eine elektrische Leitung (1) und zwei einander bezüglich der Leitung diametral gegenüberliegende Stahlseile als zugfeste Elemente aufweist, die gemeinsam durch mindestens ein Halteelement zu einer Einheit zusammengefaßt sind. Die Anordnung ist entlang eines vorgegebenen Verstellweges hin- und herbewegbar. Die Stahlseile sind fest mit der Leitung (1) verbunden und an der Leitung (1) sind in axialen Abständen voneinander getrennte, quer zur Achsrichtung derselben verlaufende Halter angebracht sind, die zusammen das Halteelement der Anordnung bilden. Die Halter sind derart bemessen, daß sie in Montage- und Arbeitsposition der Leitung (1) als Gleitkörper und Bewegungsbegrenzer innerhalb einer entlang des Verstellweges angeordneten, U-förmigen Führungsbahn (5) dienen.

## Beschreibung

Die Erfindung bezieht sich auf eine Anordnung zum Anschließen von ortsveränderlichen Verbrauchern an eine Speisequelle, welche mindestens eine elektrische Leitung und zwei einander bezüglich der Leitung diametral gegenüberliegende Stahlseile als zugfeste Elemente aufweist, die gemeinsam durch mindestens ein Halteelement zu einer Einheit zusammengefaßt sind, und welche entlang eines vorgegebenen Verstellweges hin- und herbewegbar ist (DE 200 12 827 U1).

"Ortsveränderliche Verbraucher" sind beispielsweise industrielle Automaten jedweder Art, Stapler in Hochregalen oder Roboter, die mit einer elektrischen Spannungs- und/oder Signalquelle als Speisequelle verbunden werden sollen. Die für derartige Verbraucher eingesetzten Anordnungen mit elektrischen Leitungen sind in bekannter Technik in Schleppleitungen zusammengefaßt. Solche Schleppleitungen sind in Verbindung mit Schleppketten seit Jahren auf dem Markt erhältlich und vielfältig im Einsatz. Sie können horizontal und vertikal bewegt werden. Dabei sind horizontal Entfernungen von bis zu 100 m überbrückbar, während vertikal beispielsweise Höhenunterschiede von etwa 50 m überbrückt werden können. Im Betrieb werden die Schleppleitungen in dauerndem Wechsel gebogen und gestreckt und dadurch ständig mechanisch beansprucht.

Schleppleitungen werden in bekannter Technik - wie schon erwähnt - beispielsweise in einer dem speziellen Einsatzfall jeweils angepaßten Schleppkette eingesetzt, wie sie beispielsweise in der DE 199 41 021 C2 beschrieben ist. Die Schleppkette umfaßt mehrere im Querschnitt U-förmige Aufnahmekörper, in denen Kabel oder Schläuche angeordnet werden können. Die Aufnahmekörper sind gelenkig miteinander verbunden, damit sie in der Schleppkette den erforderlichen Biegungen und Streckungen folgen können. Diese Schleppkette ist kompliziert aufgebaut und erfordert einen erheblichen Materialaufwand.

Aus dem eingangs erwähnten DE 200 12 827 U1 geht eine als Schleppleitung ausgebildete Anordnung hervor, welche zwei zugfeste Seile und ein zwischen denselben angeordnetes und von denselben getrenntes, eine Schutzhülle aus einem Isoliermaterial guter Gleitfähigkeit aufweisendes Übertragungselement hat, in dem mehrere elektrische Leitungen zusammengefaßt sind. Seile und Übertragungselement sind auf ihrer ganzen Länge in eine gemeinsame Umhüllung als Halteelement eingebettet, in welcher das Übertragungselement gleitfähig gelagert ist. Die zugfesten Seile dienen der mechanischen Entlastung der elektrischen Leitungen beim Betrieb der Schleppleitung, die für den Betrieb ebenfalls in einer Schleppkette untergebracht ist.

Der Erfindung liegt die Aufgabe zugrunde, die eingangs geschilderte Anordnung einfacher zu gestalten.

Diese Aufgabe wird gemäß der Erfindung dadurch gelöst,
- daß die Stahlseile fest mit der Leitung verbunden sind,
- daß an der Leitung in axialen Abständen voneinander getrennte, quer zur Achsrichtung derselben verlaufende Halter angebracht sind, die zusammen das Halteelement der Anordnung bilden, und
- daß die Halter derart bemessen sind, daß sie in Montage - und Arbeitsposition der Leitung als Gleitkörper und Bewegungsbegrenzer innerhalb einer entlang des Verstellweges angeordneten, U-förmigen Führungsbahn dienen.

In dieser Anordnung sind Schleppleitung und Schleppkette in einer einfach aufgebauten und einfach zu handhabenden Einheit zusammengefaßt. Diese Funktion wird von der mit den Haltern bestückten Leitung ausgefüllt, die in einer einfachen, U-förmigen Führungsbahn angeordnet ist, in der sie hin- und herbewegt wird. Die in axialen Abständen an der mit den Stahlseilen bestückten Leitung angebrachten Halter dienen nicht nur als Halter der Leitung, sondern gleichzeitig als Gleitkörper und Bewegungsbegrenzer, durch welche die Hin- und Herbewegung der Leitung beim Betrieb des Verbrauchers in der beispielsweise als rechteckiges, nach oben offenes Gehäuse ausgebildeten Führungsbahn ohne zusätzliche Halte- und Führungselemente auf einfache Weise ermöglicht ist. Von wesentlicher Bedeutung ist auch die Tatsache, daß die Leitung selbst bzw. ihr äußerer Kunststoffmantel bei ihrer Bewegung keiner Reibbeanspruchung unterliegen. Bei dieser Bewegung möglicherweise durch Beschleunigung und Verzögerung entstehende Massenkräfte werden außerdem zur weiteren Entlastung der Leitung durch die Stahlseile aufgenommen. Die Führungsbahn verläuft als steifes Gebilde durchgehend geradlinig mit gleichbleibenden Querschnittsabmessungen. Sie ist insbesondere nicht flexibel. Durch die voneinander beabstandeten Halter wird die Biegbarkeit der Leitung nicht behindert und es besteht für das durch deren Gesamtheit gebildete Halteelement insgesamt ein verminderter Materialaufwand.

Ausführungsbeispiele des Erfindungsgegenstandes sind in den Zeichnungen dargestellt.

Es zeigen:
Fig. 1 in schematischer Darstellung eine Anordnung nach der Erfindung an einem Einsatzort.
Fig. 2 einen Schnitt durch Fig. 1 längs der Linie ∥ - ∥ in vergrößerter Darstellung.
Fig. 3 eine Ausführungsform einer in der Anordnung nach der Erfindung einsetzbaren Leitung.
Fig. 4 einen Schnitt durch Fig. 3 längs der Linie IV - IV.
Fig. 5 eine gegenüber Fig. 3 ergänzte Ausführungsform der Leitung im Schnitt.
Fig. 6 eine Einzelheit der Leitung in vergrößerter Darstellung.

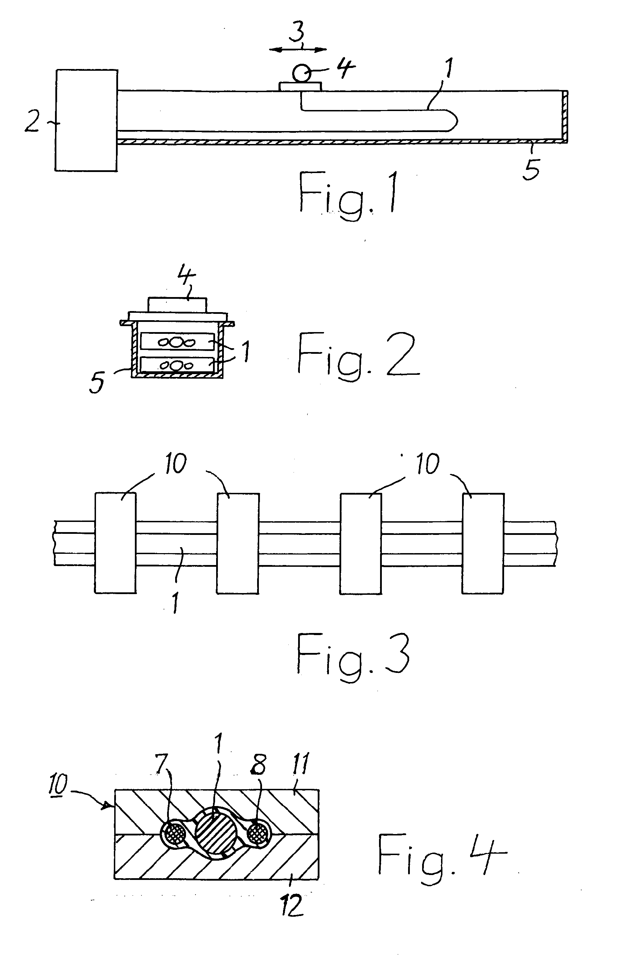

In Fig. 1 ist schematisch eine Anordnung mit einer elektrischen Leitung 1 gezeigt, die in einer Schlaufe zwischen einer ortsfesten Speisequelle 2 und einem in Richtung des Doppelpfeils 3 bewegbaren Verbraucher 4 verläuft. Der Verbraucher 4 ist entlang eines vorgegebenen Verstellweges hin- und herbewegbar, der durch eine U-förmige Führungsbahn 5 realisiert ist. Sie besteht mit Vorteil aus Stahl und kann mit einer abriebfesten Beschichtung versehen sein, beispielsweise mit einem Material auf Polytetrafluorethylen-Silikat-Basis.

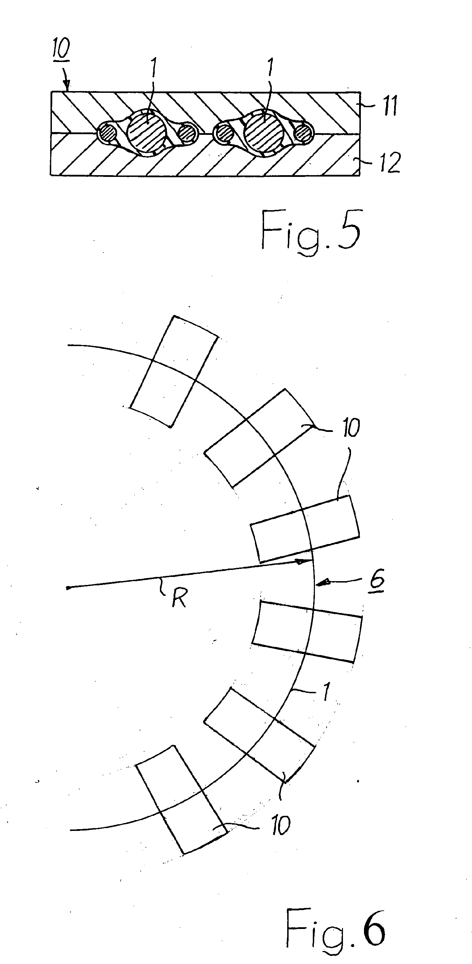

Bei der Bewegung des Verbrauchers 4 wird das gebogene Ende 6 (Fig. 6) der Leitung 1 innerhalb der Führungsbahn 5 ebenfalls hin- und herbewegt. Die Führungsbahn 5 ist dabei so hoch ausgeführt, daß das gebogene Ende 6 der Leitung 1 darin vollständig aufgenommen ist. Der Biegeradius R der Leitung 1 liegt bei etwa 7,5 x D, mit dem Durchmesser D der Leitung 1. An der Speisequelle 2 ist die Leitung 1 zugfest montiert und in derselben mit einer Spannungsquelle einerseits sowie einer Signalquelle andererseits verbunden. Sie ist auch am Verbraucher 4 zugfest angebracht und wird mit bzw. von diesem in Richtung des Doppelpfeils 3 bewegt.

Die Leitung 1 der Anordnung ist gemäß den Fig. 3 und 4 mit zwei Stahlseilen 7 und 8 fest verbunden, die auf beiden Seiten der Leitung 1, einander diametral gegenüber liegend angeordnet sind. Sie sind in bevorzugter Ausführungsform zusammen mit der Leitung 1 in einen durch Extrusion erzeugten Mantel 9 aus Isoliermaterial eingebettet. Der Mantel 9 besteht mit Vorteil aus Polyurethan. Die Stahlseile 7 und 8 bestehen vorzugsweise aus verzinkten oder verzinnten Stahldrähten oder auch aus Chrom-Nickel-Stahldrähten, jeweils in Bündelkonstruktion. Sie sind hochflexibel, sehr fest und stauchstabil. Die Stahlseile 7 und 8 haben in bevorzugter Ausführungsform einen kleineren Durchmesser als die Leitung 1. Sie können aber auch einen größeren Durchmesser als dieselbe haben, wenn beispielsweise sehr hohe Massenkräfte aufgenommen werden sollen, und die Durchmesser von Leitung 1 und Stahlseilen 7 und 8 können auch gleich sein.

An der aus Leitung 1 und Stahlseilen 7 und 8 bestehenden Anordnung ist in axialen Abständen eine Vielzahl von Haltern 10 angebracht, deren jeweilige Position auf der Anordnung festliegt. Die Halter 10 können aus einem abriebfesten Kunststoff bestehen, wie beispielsweise glasfaserverstärktes Polyamid oder glasfaserverstärktes Duroplast. Es ist auch möglich, die Halter 10 aus Leichtmetall bzw. einer Leichtmetall-Legierung aufzubauen, beispielsweise auf Aluminiumbasis. Sie können in allen Ausführungsformen zur Verminderung der Gleitreibung mit einem entsprechenden Material beschichtet sein, wie beispielsweise einem Polytetrafluorethylen-Silikat. Die Halter 10 sind so bemessen, daß sie ohne Klemmung genau in die Führungsbahn 5 passen, so daß sie in derselben unbehindert bewegt werden können. Die Halter 10 bestehen mit Vorteil aus zwei Teilen 11 und 12, die von unterschiedlichen Seiten an die Anordnung angelegt und fest miteinander verbunden werden können, beispielsweise durch Schnapp- oder Schraubverbindungen.

In der Anordnung nach Fig. 5 sind zwei mit Stahlseilen 7 und 8 bestückte Leitungen 1 enthalten, die im dargestellten Ausführungsbeispiel gleiche Durchmesser haben. Es können aber auch Leitungen 1 und/oder Stahlseile 7 und 8 mit unterschiedlichen Abmessungen eingesetzt werden. In einer Anordnung können auch mehr als zwei mit Stahlseilen 7 und 8 ausgerüstete Leitungen 1 vorhanden sein. Die Abmessungen der Halter 10 und auch der Führungsbahn 5 sind der jeweiligen Ausführungsform der Anordnung angepaßt. Bei mehr als zwei Leitungen 1 in einer Anordnung können die Halter 10 gegebenenfalls auch in zwei nebeneinander liegende Teile aufgeteilt sein.

In einer weiteren Ausgestaltung der Anordnung können sowohl die Halter 10 als auch die Führungsbahn 5 mit Magneten gleicher Polarität bestückt sein, um eine zusätzliche Abstandssicherung zwischen diesen Teilen und eine verbesserte Führung der Leitung 1 zu erreichen. Die Magnete können in der Führungsbahn 5 in axialen Abständen voneinander angeordnet sein, die den Abständen der Halter 10 voneinander entsprechen.

## Patentansprüche

1. Anordnung zum Anschließen von ortsveränderlichen Verbrauchern an eine Speisequelle, welche mindestens eine elektrische Leitung und zwei einander bezüglich der Leitung diametral gegenüberliegende Stahlseile als zugfeste Elemente aufweist, die gemeinsam durch mindestens ein Halteelement zu einer Einheit zusammengefaßt sind, und welche entlang eines vorgegebenen Verstellweges hin- und herbewegbar ist, **dadurch gekennzeichnet,**
- **daß** die Stahlseile (7,8) fest mit der Leitung (1) verbunden sind,
- **daß** an der Leitung (1) in axialen Abständen voneinander getrennte, quer zur Achsrichtung derselben verlaufende Halter (10) angebracht sind, die zusammen das Halteelement der Anordnung bilden, und
- **daß** die Halter (10) derart bemessen sind, daß sie in Montage- und Arbeitsposition der Leitung (1) als Gleitkörper und Bewegungsbegrenzer innerhalb einer entlang des Verstellweges angeordneten, U-förmigen Führungsbahn (5) dienen.

2. Anordnung nach Anspruch 1, **dadurch gekennzeichnet, daß** die Führungsbahn (5) durchgehend geradlinig, mit gleichbleibenden Querschnittsabmessungen ausgeführt ist.

3. Anordnung nach Anspruch 1 oder 2, **dadurch gekennzeichnet, daß** die Führungsbahn (5) mit einem abriebfesten Material beschichtet ist.

4. Anordnung nach einem der Ansprüche 1 bis 3, **dadurch gekennzeichnet, daß** die Halter (10) aus abriebfestem Kunststoff bestehen.

5. Anordnung nach einem der Ansprüche 1 bis 3, **dadurch gekennzeichnet, daß** die Halter (10) aus einem Leichtmetall oder einer Leitmetall-Legierung bestehen.

6. Anordnung nach Anspruch 4 oder 5, **dadurch gekennzeichnet, daß** die Halter (10) mit abriebfestem Material beschichtet sind.

7. Anordnung nach einem der Ansprüche 1 bis 6, **dadurch gekennzeichnet, daß** an den Haltern (10) und in der Führungsbahn (5) korrespondierende Magnete gleicher Polarität angebracht sind.
